# EUROPEAN PATENT SPECIFICATION

(11) **EP 4 679 165 B1**
(45) Date of publication and mention of the grant of the patent: **02.12.2026**
(21) Application number: 25152462.5
(22) Date of filing: 17.01.2025
(51) Int. Cl.: G02B 5/02, G02B 27/00, G02B 27/09, G06F 3/01, G06F 3/03

(54) **OPTICAL TRACKING DEVICE**
OPTISCHE NACHFÜHRVORRICHTUNG
DISPOSITIF DE POURSUITE OPTIQUE

(30) Priority: 08.07.2024 US 202463668312 P; 05.11.2024 US 202418937022
(43) Date of publication of application: 14.01.2026
(73) Proprietor: HTC Corporation, Taoyuan City 330, (TW)
(72) Inventor: CHEN, BO-JUN, 330 Taoyuan City (TW); CHUNG, CHIH PIN, 330 Taoyuan City (TW); HSIEH, HSIEN-JU, 330 Taoyuan City (TW); HUANG, CHAO SHUAN, 330 Taoyuan City (TW)
(74) Representative: 2K Patent Partnerschaft mbB

(56) References cited:
- CN-U- 218 728 024
- DE-A1- 102014 106 585
- US-A1- 2014 111 862
- US-A1- 2020 348 753
- US-A1- 2021 160 408
- US-B1- 11 460 185

## Description

### [Technical Field]

The disclosure relates to an optical device, particularly to a light source for an optical tracking device, and more particularly to an optical tracking device comprising a light source.

### [Description of Related Art]

With the development of science and technology, the positioning function of electronic products for ambient objects or users is becoming increasingly important; for instance, augmented reality (AR), virtual reality (VR), and mixed reality (MR) need to track the user's eye positions, smart home appliances sense ambient objects, and so on. Among these, the optical tracking technology has advantages such as being less susceptible to interference and the ability to track multiple targets, thus attracting market attention.

Existing optical tracking devices employ surface-treated casing mechanisms or structures composed of optical lenses combined with point light sources, such as light emitting diodes (LEDs) as light emitters to provide light spots for sensing the position of tracked objects. The aforementioned design requires a relatively complicated casing mechanism, a more complex surface treatment process, and a special optical element design to produce the light emitter with high quality and high stability. This often results in more complex mechanical designs, manufacturing processes, or molds, and optical elements also require high-precision assembly and alignment. These reasons all lead to higher manufacturing costs of the optical tracking devices and the reduced product competitiveness.

US 11 460 185 B1 discloses an integrated functional multilayer structure, comprising a thermoplastic substrate film, a lighting module provided upon the substrate film and having a circuit board for hosting electronics. A circuitry arranged on the circuit board includes at least one light source and a thermoplastic layer including one or more thermoplastic materials is molded upon the substrate film and at least laterally surrounds or even partially covers the lighting module. A wider accommodation space for accommodating the at least one light source and a step-shaped structure for supporting additional films, such as a light shielding layer or a diffuser, are not disclosed.

### [SUMMARY]

It is an object of the disclosure to provide an efficient light source for an optical tracking device that can be manufactured in a simple and cost-efficient manufacturing process.

This problem is solved by a light source for an optical tracking device as claimed in claim 1. Further advantageous embodiments are the subject-matter of the dependent claims.

According to the present invention there is provided a light source for an optical tracking device as defined in claim 1. Further developments of the present invention are the subject of the dependent claims. A light source for an optical tracking device according to the disclosure can be manufactured with a simple manufacturing process that can effectively improve product yield and significantly reduce the production cost of the optical tracking device. Besides, the optical tracking device generates a lower proportion of stray light, thus allowing sensing light with better sharpness, reducing the probability of misjudgment by the tracking device, and further increasing sensing stability.

An embodiment of the disclosure provides an optical tracking device that includes a circuit substrate, a sensing light source, and a light diffuser. The sensing light source is electrically connected to the circuit substrate and configured to emit sensing light. The sensing light source is disposed between the light diffuser and the circuit substrate. The light diffuser includes a diffusion film and a light shielding layer. The diffusion film overlaps the sensing light source. The light shielding layer is disposed on the diffusion film and includes a transparent pattern. The transparent pattern overlaps the sensing light source.

In light of the above, the optical tracking device provided in the disclosure utilizes the light diffuser disposed on the sensing light source and enables the transparent pattern of the light diffuser to overlap the sensing light source. The light shielding layer of the light diffuser can provide a light shielding effect, which can block unexpected light exit regions and absorb stray light, further enhancing the sharpness of the sensing light. Moreover, a diffusion effect of the diffusion film on the sensing light is equivalent to changing the shape of a point light source of the sensing light source into the shape of a light spot of the transparent pattern and effectively moving the position of the sensing light source to the position of the transparent pattern. This may effectively eliminate paths of stray light randomly penetrating, being reflected, and being scattered in other components, avoiding light spot images from appearing in incorrect positions, preventing interference and misjudgment of the tracking device, and enhancing the accuracy of the optical tracking effect. Moreover, the arrangement of the diffusion film, the light shielding layer, and the transparent pattern is easy (e.g., applying a printing process or an adhesive process to attach the light shielding layer to the diffusion film), which may effectively reduce the number of process steps, further lower the production cost of the optical tracking device, and improve the yield of the optical tracking device.

To make the above-mentioned features and advantages provided in the disclosure more evident and understandable, embodiments are described below in detail with reference to the accompanying drawings.

### [BRIEF DESCRIPTION OF THE DRAWINGS]

FIG. 1 is a schematic diagram of an optical structure of an optical tracking device according to an embodiment provided in the disclosure.
FIG. 2 is a schematic cross-sectional diagram of the optical tracking device provided in the embodiment depicted in FIG. 1.
FIG. 3A to FIG. 3C are schematic diagrams illustrating a manufacturing process of a light diffuser according to an embodiment provided in the disclosure.

### [DESCRIPTION OF THE EMBODIMENTS]

The terminology "about," "approximately," or "substantially" used herein includes the average of the stated value and an acceptable range of deviations from the particular value as determined by those skilled in the art. For instance, the terminology "about" may refer to as being within one or more standard deviations of the stated value, or within ±30%, ±20%, ±15%, ±10%, or ±5%. Furthermore, the terminology "about," "approximately," or "substantially" as used herein may be chosen from a range of acceptable deviations or standard deviations depending on the optical properties, etching properties, or other properties, rather than one standard deviation for all properties.

In the accompanying drawings, the thickness of layers, films, panels, regions, and so forth are enlarged for clarity. It should be understood that when an element, such as a layer, a film, a region, or a substrate, is referred to as being "on" or "connected to" another element, it can be directly on or connected to the another element, or an intermediate element may also be present. In contrast, when an element is referred to as being "directly on" or "directly connected to" another element, no intermediate element is present. As used herein, being "connected" may refer to a physical and/or electrical connection. Furthermore, being "electrically connected" or "coupled" may refer to the presence of other elements between the two elements.

Reference will now be made in detail to the exemplary embodiments of the disclosure, examples of which are illustrated in the accompanying drawings. Whenever possible, the same reference numbers are used in the drawings and the description to refer to the same or like parts.

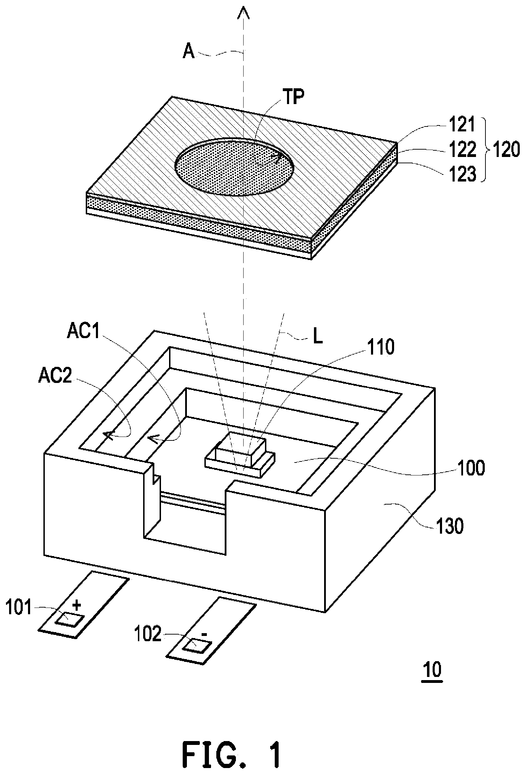

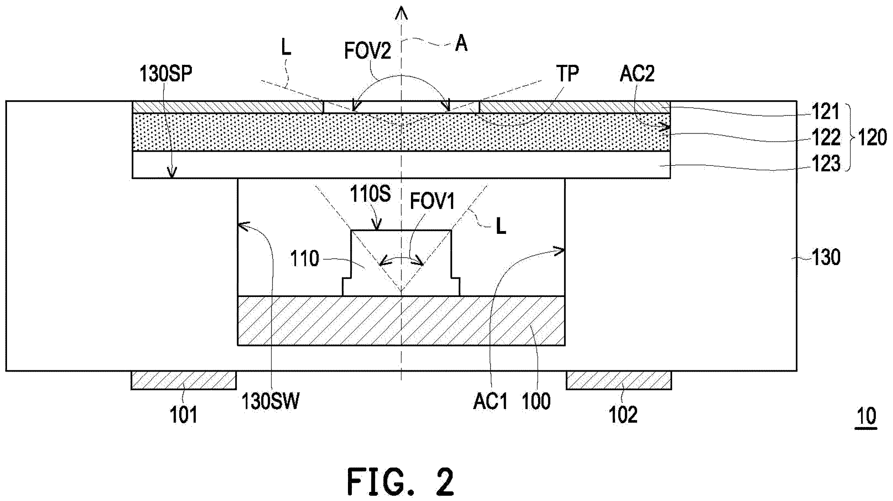

FIG. 1 is a schematic diagram of an optical structure of an optical tracking device according to an embodiment provided in the disclosure. FIG. 2 is a schematic cross-sectional diagram of the optical tracking device provided in the embodiment depicted in FIG. 1. Please refer to FIG. 1 and FIG. 2 simultaneously. An optical tracking device 10 includes a circuit substrate 100, a sensing light source 110, and a light diffuser 120. The sensing light source 110 is electrically connected to the circuit substrate 100 and configured to provide sensing light L. The optical tracking device 10 may further include an optical sensor (e.g., a camera) and a solid-state processor (both not shown). When the emitted sensing light L reaches the optical sensor (e.g., the camera) of the optical tracking device 10 through reflection and refraction, the optical sensor converts the received sensing light L into electrical signals. The solid-state processor may receive these electrical signals to determine information about a target object (e.g., eyes or external obstacles), such as the position and posture changes of the target object, a surface shape of the target object, a movement path of the target object, or the like, which should not be construed as a limitation in the disclosure. The solid-state processor may include, for instance, a microcontroller unit (MCU), a central processing unit (CPU), a microprocessor, a digital signal processor (DSP), a programmable controller, a programmable logic device (PLD), or other similar devices or combinations of these devices, which should not be construed as a limitation in the disclosure. Besides, in an embodiment, various functions of the solid-state processor can be implemented as a plurality of programming codes. These codes may be stored in a memory and processed by the solid-state processor. Alternatively, in some embodiments, the various functions of the solid-state processor may be implemented as one or more circuits. The disclosure does not limit the implementation of the various functions of the solid-state processor to the usage of software or hardware.

The circuit substrate 100 may be a printed circuit board (PCB) or a flexible printed circuit (FPC) with flexibility, which should not be construed as a limitation in the disclosure. In other embodiments, a base material of the circuit substrate 100 may be a solid-state glass substrate or a plastic substrate. The circuit substrate 100 may include various signal lines, switch elements, driving circuits, and pads (all not shown) for providing and transmitting electrical signals to the sensing light source 110 to control the sensing light source 110 to emit the sensing light L. The sensing light source 110 may be a light emitting diode (LED), a laser diode (LD), or a different light source, and a wavelength range of the sensing light L emitted by the sensing light source 110 may include the visible light band (e.g., a wavelength ranging from 380nm to 750nm) or include the infrared light band (e.g., a wavelength of 750 nm or more or a near-infrared light band with a wavelength of 1054 nm or more), which should not be construed as a limitation in the disclosure.

The light diffuser 120 is disposed on the sensing light source 110. In other words, the sensing light source 110 is disposed between the light diffuser 120 and the circuit substrate 100. It is worth mentioning that the light diffuser 120 further includes a light shielding layer 121 and a diffusion film 122. The diffusion film 122 overlaps the sensing light source 110, and the light shielding layer 121 is disposed on the diffusion film 122. A material of the diffusion film 122 is, for instance, a base material with a high transmittance and a low absorption rate with respect to the sensing light L, such as polyethylene terephthalate (PET), polymethylmethacrylate (PMMA), polystyrene (PS), or polycarbonate (PC), and includes a plurality of diffusion particles uniformly distributed in the aforementioned base material, enabling the diffusion film 122 to have a certain haze value and a certain transmittance with respect to the sensing light L. Accordingly, the diffusion particles can lead the sensing light L to diffuse within the diffusion film 122. In some embodiments, the haze value of the diffusion film 122 with respect to the sensing light L may be greater than or equal to 50% and less than or equal to 99%. In some embodiments, the haze value of the diffusion film 122 with respect to the sensing light L may be substantially 90%. In some embodiments, the transmittance of the diffusion film 122 with respect to the sensing light L is greater than or equal to 50% and less than or equal to 99%. In some embodiments, the transmittance of the diffusion film 122 with respect to the sensing light L may be 70%, which should not be construed as a limitation in the disclosure.

On the other hand, the light shielding layer 121 may include, but is not limited to, a dark light shielding material (such as black), a light shielding material with a high optical density (OD) value, e.g., the OD value > 0.5, a light shielding material with low transmittance with respect to the sensing light L (e.g., the transmittance may be less than or equal to 30%), or a light shielding material with a high absorption rate with respect to the sensing light L, and meanwhile the functions of protection and aesthetics are also taken into account. The light shielding layer 121 may be a light shielding coating material made of the aforementioned light shielding materials and formed through applying a printing process or a coating process. Alternatively, it may be formed by directly adhering a light shielding adhesive tape including the aforementioned light shielding material to the diffusion film 122. The light shielding layer 121 may also be other types of light shielding structures, which should not be construed as a limitation in the disclosure.

It is worth mentioning that the light shielding layer 121 further includes a transparent pattern TP overlapping the sensing light source 110. For instance, the sensing light L emitted by the sensing light source 110 may have a main light exit direction (e.g., a direction of an optical axis A), and the optical axis A may perpendicularly pass through the center of the transparent pattern TP and the center of a light exit surface 110S of the sensing light source 110, which should not be construed as a limitation in the disclosure. The transparent pattern TP may be composed of a surface of the diffusion film 122 that is not covered by the light shielding layer 121 or a thin film with a high transmittance with respect to the sensing light L, which should not be construed as a limitation in the disclosure either. In this embodiment, the contour of the transparent pattern TP may be circular or elliptical; however, in other embodiments not shown, the contour of the transparent pattern TP may be rectangular, triangular, or in another shape, which should not be construed as a limitation in the disclosure. In some embodiments, the thickness of the diffusion film 122 (i.e., the thickness in the direction of the optical axis A, unless otherwise specified in the following text, the direction of the thickness is always in the direction of the optical axis A) may be 0.5 millimeters (mm). In embodiments where the transparent pattern TP is circular, the diameter of the transparent pattern TP (i.e., the diameter perpendicular to the direction of the optical axis A) may be 4 mm, which should not be construed as a limitation in the disclosure.

Accordingly, when the sensing light source 110 emits the sensing light L, the sensing light L may have a first field of view FOV1. Due to the light shielding effect afforded by the light shielding layer 121, part of the sensing light L cannot pass through a region where the light shielding layer 121 is disposed and is blocked, which can prevent the sensing light L from being transmitted to other parts of the diffusion film 122 and being unexpectedly refracted, reflected, or diffused. This precludes the sensing light L from ultimately appearing at unexpected positions, thereby reducing the chance of generating stray light. Moreover, most of the sensing light L is emitted from the optical tracking device 10 from a position where the transparent pattern TP overlaps the sensing light source 110. This result may reduce the chance of misjudgment by the optical tracking device 10, thus enhancing the accuracy of the optical tracking device 10.

Moreover, when the sensing light L is transmitted to the diffusion film 122, the diffusion effect of the diffusion film 122 on the sensing light L may cause a refraction path of the sensing light L to be reorganized. As a result, after the sensing light L passes through the diffusion film 122, a light exit direction of the sensing light L is randomly distributed, so as to have a second field of view FOV2 that is larger than the first field of view FOV1. The effect is equivalent to moving the position of the sensing light source 110 to the position of the transparent pattern TP. From another perspective, the function of the light diffuser 120 and the transparent pattern TP is equivalent to effectively changing the shape of the point light source of the sensing light source 110 into the shape of the light spot similar to the transparent pattern TP. This enables the sensing light L to be easily captured by the optical sensor when the sensing light L irradiates the optical sensor at a large angle, enhancing the tracking effect of the optical tracking device 10. The dimension of the second field of view FOV2 can be designed through the haze value of the diffusion film 122, the contour or size of the transparent pattern TP, and the structure of the sensing light source 110, making it easy to adjust the light pattern of the optical tracking device 10 according to requirements. On the other hand, since the light shielding layer 121 and the diffusion film 122 are easy to manufacture through applying simple processes, and it is not necessary to additionally arrange optical lenses or optical elements, the light diffuser 120 can achieve low-cost mass production. This effectively reduces the cost of the optical tracking device 10, provides design flexibility, and allows the device to be miniaturized and have lightweight, which is more advantageous for product competitiveness when the optical tracking device 10 is applied to wearable displays (such as VR, AR, or MR).

Please continue to refer to FIG. 1 and FIG. 2. The optical tracking device 10 further includes a fixing member 130. The fixing member 130 has a first accommodation space AC1 and a second accommodation space AC2, the sensing light source 110 is disposed in the first accommodation space AC1, and the light diffuser 120 is disposed in the second accommodation space AC2. Besides, in this embodiment, an internal sidewall 130SW of the fixing member 130 surrounds the sensing light source 110, so that light beams emitted laterally from the sensing light source 110 may be reflected or absorbed back into the first accommodation space AC1 and the second accommodation space AC2 by the sidewall 130SW, enabling the sensing light L to exit from the optical tracking device 10 again through the transparent pattern TP. This may be beneficial for forward light emission of the optical tracking device 10 (i.e., a higher proportion of the sensing light L may exit in the direction of the optical axis A) to increase a light energy utilization rate. A material of the fixing member 130 may be, for instance, a non-transparent plastic or metal material, which should not be construed as a limitation in the disclosure. In some embodiments, when the material of the fixing member 130 is plastic, the fixing member 130 may be produced using 3D printing, which may help reduce the production cost of the fixing member 130. In this embodiment, the fixing member 130 may have an opening (not shown) to allow circuit pins of the circuit substrate 100 to extend outside the fixing member 130. For instance, a first electrode 101 and a second electrode 102 of the circuit substrate 100 may extend outside the fixing member 130 to provide control signals or power signals required by the sensing light source 110, which should not be construed as a limitation in the disclosure.

The fixing member 130 may be configured to maintain an appropriate distance between the light diffuser 120 and the sensing light source 110, preventing compression between the light diffuser 120 and the sensing light source 110 when the optical tracking device 10 is subject to external impact. For instance, the fixing member 130 may have a support portion 130SP surrounding the light diffuser 120, and the light diffuser 120 may be disposed on the support portion 130SP. On the other hand, the light diffuser 120 of the optical tracking device 10 may further include an adhesive layer 123 disposed between the fixing member 130 and the diffusion film 122, and the light diffuser 120 may be adhered to the fixing member 130 through the adhesive layer 123. From another perspective, the adhesive layer 123 may contact the support portion 130SP and the diffusion film 122 on two opposite sides of the optical axis A. The adhesive layer 123 may be, for instance, a pressure sensitive adhesive (PSA) with a high transmittance (e.g., greater than 30%) with respect to the sensing light L, which should not be construed as a limitation in the disclosure. In some embodiments, the adhesive layer 123 may also be other types of adhesives or adhesive layers. In some embodiments, the thickness of the adhesive layer 123 may be 0.2 mm.

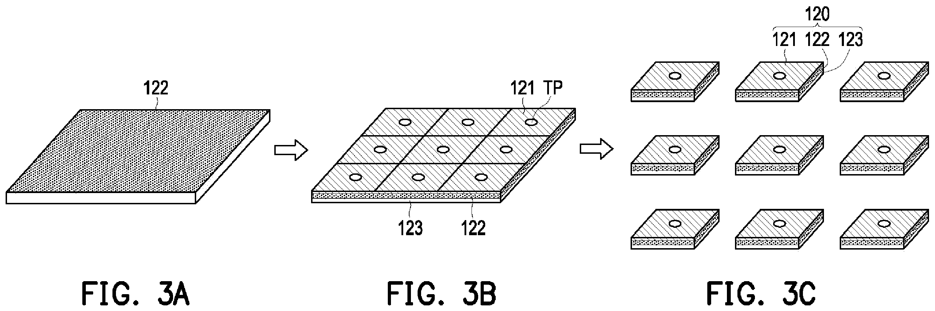

FIG. 3A to FIG. 3C are schematic diagrams illustrating a manufacturing process of a light diffuser according to an embodiment provided in the disclosure. Please refer first to FIG. 3A and FIG. 3B. First, a diffusion film 122 is provided, and a light shielding layer 121 and an adhesive layer 123 are disposed on two opposite sides of the diffusion film 122, respectively, so as to produce a light diffuser 120 occupying a large area. The adhesive layer 123 may be directly adhered to one side of the diffusion film 122, while the light shielding layer 121 may be disposed on the other side of the diffusion film 122 through the aforementioned printing and coating process or direct adhesion. At the same time, the transparent pattern TP may be produced by applying a printing process, which should not be construed as a limitation in the disclosure. Next, with reference to FIG. 3C, the light diffuser 120 occupying a large area may be cut to form individual light diffusers 120, thereby completing the production of the light diffuser 120. In some embodiments, the area of one individual light diffuser 120 may be substantially 6.65 mm multiplied by 7.4 mm, and certainly the disclosure is not limited to this. Finally, the individual light diffuser 120 is adhered to the fixing member 130 to package the sensing light source 110, thereby completing the manufacture of the optical tracking device 10.

To sum up, the optical tracking device provided in this disclosure employs the light diffuser disposed on the sensing light source and enables the transparent pattern of the light diffuser to overlap the sensing light source. The light shielding layer of the light diffuser may provide the light shielding effect, which may block unexpected light exit regions and absorb stray light, further enhancing the sharpness of the sensing light. Moreover, the diffusion effect of the diffusion film on the sensing light is equivalent to changing the shape of the point light source of the sensing light source into the shape of the light spot of the transparent pattern and effectively moving the position of the sensing light source to the position of the transparent pattern. This may effectively eliminate the paths of the stray light arbitrarily penetrating, being reflected, and being scattered in other components, which prevent the light spot images from appearing in incorrect positions, prevent interference and misjudgment of the tracking device, and enhance the accuracy of the optical tracking effect. In addition, the manner in which the diffusion film, the light shielding layer, and the transparent pattern are arranged is easy (e.g., through applying a printing process or an adhesion process to adhere the light shielding layer to the diffusion film), which may effectively reduce the process steps, further reduce the production cost of the optical tracking device, and enhance the yield of the optical tracking device.

Although the embodiments disclosed above provide specific examples of the invention, they are not intended to limit the scope of what is disclosed herein. Any person skilled in the art may make some modifications and refinements without departing from the scope afforded by the disclosure. Therefore, the protection scope afforded by the disclosure should be defined by the appended claims.

## Claims

1. A light source (10) for an optical tracking device, comprising:
a circuit substrate (100);
a sensing light source (110), electrically connected to the circuit substrate and configured to emit sensing light;
a light diffuser (120); and
a fixing member (130); wherein
the sensing light source is disposed between the light diffuser and the circuit substrate, and
the light diffuser comprises a diffusion film (122), overlapping the sensing light source, and a light shielding layer (121), disposed on the diffusion film, said light shielding layer comprising a transparent pattern (TP) that overlaps the sensing light source (110), and wherein
the fixing member comprises an accommodation space (AC1), and
the sensing light source (110) being disposed in the accommodation space (AC1);
**characterized in that**
the fixing member (130) further comprises a second accommodation space (AC2) provided at an upper end of the accommodation space (AC1) and surrounded by an internal sidewall (130SW) of the fixing member (130), wherein
the second accommodation space (AC2) is configured to accommodate the light diffuser (120) at a predetermined distance to the sensing light source (110) and such that light beams emitted laterally from the sensing light source (110) are reflected or absorbed back into the first accommodation space (AC1) and the second accommodation space (AC2) by the internal sidewall (130SW), and wherein
the second accommodation space (AC2) has a larger width than the accommodation space (AC1) so that a step-shaped support portion (130SP) surrounding the light diffuser (120) is formed, wherein the light diffuser (120) is supported on a bottom of the step-shaped support portion (130SP).

2. The light source according to claim 1, wherein a haze value of the diffusion film (122) is greater than or equal to 50% and less than or equal to 99%.

3. The light source according to claim 1, wherein a transmittance of the diffusion film (122) with respect to the sensing light is greater than or equal to 50% and less than or equal to 99%.

4. The light source according to any of the preceding claims, wherein the light diffuser further comprises an adhesive layer disposed between the fixing member and the diffusion film.

5. The light source according to claim 4, wherein a material of the fixing member comprises plastic.

6. The light source according to any of the preceding claims, wherein the light diffuser (120) is adhered to the fixing member (130) through an adhesive layer (123) provided on the bottom of the step-shaped support portion (130SP).

7. The light source according to any of the preceding claims, wherein a wavelength range of the sensing light comprises an infrared light band.

8. The light source according to any of the preceding claims, wherein a material of the light shielding layer comprises a light shielding adhesive tape or a light shielding coating material.

9. The light source according to any of the preceding claims, wherein the diffusion film comprises a plurality of diffusion particles.

10. The light source according to any of the preceding claims, wherein the light shielding layer has a transmittance greater than 30% for the sensing light.

11. An optical tracking device, comprising
the light source (10) as claimed in any of the preceding claims,
an optical sensor, configured for detecting sensing light emitted by the light source (10) and reflected or refracted by a target object towards the optical sensor and for converting the detected sensing light (L) into electrical signals, and
a solid-state processor, configured for receiving the electrical signals from the optical sensor and converting the received electrical signals to determine information about the target object.

## Patentansprüche

1. Lichtquelle (10) für eine optische Folgevorrichtung, umfassend:
ein Schaltungssubstrat (100);
eine Sensorlichtquelle (110), die elektrisch mit dem Schaltungssubstrat verbunden und so ausgelegt ist, dass sie ein Sensorlicht aussendet;
einen Lichtdiffusor (120); sowie
ein Befestigungselement (130); wobei
die Sensorlichtquelle zwischen dem Lichtdiffusor und dem Schaltungssubstrat angeordnet ist, und
der Lichtdiffusor eine Lichtdiffusionsfolie (122), der mit der Sensorlichtquelle überlappend angeordnet ist, und eine auf der Lichtdiffusionsfolie angeordnete Lichtabschirmschicht (121) umfasst, wobei die Lichtabschirmschicht ein transparentes Muster (TP) aufweist, das mit der Sensorlichtquelle (110) überlappt, und wobei
das Befestigungselement einen Aufnahmeraum (AC1) umfasst und
die Sensorlichtquelle (110) in dem Aufnahmeraum (AC1) angeordnet ist;
**dadurch gekennzeichnet, dass**
das Befestigungselement (130) ferner einen zweiten Aufnahmeraum (AC2) umfasst, der an einem oberen Ende des Aufnahmeraums (AC1) vorgesehen ist und von einer inneren Seitenwand (130SW) des Befestigungselements (130) umgeben ist, wobei
der zweite Aufnahmeraum (AC2) so ausgebildet ist, dass er den Lichtdiffusor (120) in einem vorbestimmten Abstand zur Sensorlichtquelle (110) aufnimmt, und zwar derart, dass seitlich von der Sensorlichtquelle (110) emittierte Lichtstrahlen von der inneren Seitenwand (130SW) in den ersten Aufnahmeraum (AC1) und den zweiten Aufnahmeraum (AC2) zurückreflektiert oder absorbiert werden, und wobei
der zweite Aufnahmeraum (AC2) eine größere Breite als der Aufnahmeraum (AC1) aufweist, so dass ein den Lichtdiffusor (120) umgebender stufenförmiger Stützabschnitt (130SP) gebildet wird, wobei der Lichtdiffusor (120) auf einem Boden des stufenförmigen Stützabschnitts (130SP) abgestützt ist.

2. Lichtquelle nach Anspruch 1, wobei ein Lichtstreuwert der Lichtdiffusionsfolie (122) größer oder gleich 50 % und kleiner oder gleich 99 % ist.

3. Lichtquelle nach Anspruch 1, wobei die Durchlässigkeit der Diffusionsfolie (122) für das Sensorlicht größer oder gleich 50 % und kleiner oder gleich 99 % ist.

4. Lichtquelle nach einem der vorstehenden Ansprüche, wobei der Lichtdiffusor ferner eine zwischen dem Befestigungselement und der Diffusionsfolie angeordnete Klebeschicht umfasst.

5. Lichtquelle nach Anspruch 4, wobei das Material des Befestigungselements Kunststoff umfasst.

6. Lichtquelle nach einem der vorstehenden Ansprüche, wobei der Lichtdiffusor (120) über eine an der Unterseite des stufenförmigen Stützabschnitts (130SP) vorgesehene Klebeschicht (123) an dem Befestigungselement (130) befestigt ist.

7. Lichtquelle nach einem der vorstehenden Ansprüche, wobei ein Wellenlängenbereich des Erfassungslichts ein Infrarotlichtband umfasst.

8. Lichtquelle nach einem der vorstehenden Ansprüche, wobei ein Material der Lichtabschirmschicht ein lichtabschirmendes Klebeband oder ein lichtabschirmendes Beschichtungsmaterial umfasst.

9. Lichtquelle nach einem der vorstehenden Ansprüche, wobei die Lichtdiffusionsfolie eine Vielzahl von Licht-Diffusionspartikeln umfasst.

10. Lichtquelle nach einem der vorstehenden Ansprüche, wobei die Lichtabschirmschicht eine Durchlässigkeit von mehr als 30 % für das Sensorlicht aufweist.

11. Optische Folgevorrichtung, umfassend
die Lichtquelle (10) nach einem der vorstehenden Ansprüche,
einen optischen Sensor, der dazu ausgelegt ist, von der Lichtquelle (10) emittiertes und von einem Zielobjekt in Richtung des optischen Sensors reflektiertes oder gebrochenes Erfassungslicht zu erfassen und das erfasste Erfassungslicht (L) in elektrische Signale umzuwandeln, sowie
einen Festkörperprozessor, der dazu ausgelegt ist, die elektrischen Signale von dem optischen Sensor zu empfangen und die empfangenen elektrischen Signale zu verarbeiten, um Informationen über das Zielobjekt zu ermitteln.

## Revendications

1. Une source lumineuse (10) destinée à un dispositif de suivi optique, comprenant :
un substrat de circuit (100) ;
une source lumineuse de détection (110), connectée électriquement au substrat de circuit et configurée pour émettre une lumière de détection ;
un diffuseur de lumière (120) ; et
un élément de fixation (130) ; dans laquelle
la source lumineuse de détection est disposée entre le diffuseur de lumière et le substrat de circuit, et
le diffuseur de lumière comprend un film de diffusion (122), recouvrant la source lumineuse de détection, et une couche de protection contre la lumière (121), disposée sur le film de diffusion, ladite couche de protection contre la lumière comprenant un motif transparent (TP) qui recouvre la source lumineuse de détection (110), et dans laquelle
l'élément de fixation comprend un espace de logement (AC1), et
la source de lumière de détection (110) est disposée dans l'espace de logement (AC1) ;
**caractérisé en ce que**
l'élément de fixation (130) comprend en outre un deuxième espace de logement (AC2) prévu à une extrémité supérieure de l'espace de logement (AC1) et entouré par une paroi latérale interne (130SW) de l'élément de fixation (130), dans lequel
le deuxième espace de logement (AC2) est configuré pour loger le diffuseur de lumière (120) à une distance prédéterminée de la source lumineuse de détection (110) et de telle sorte que les faisceaux lumineux émis latéralement par la source lumineuse de détection (110) soient réfléchis ou absorbés vers le premier espace de logement (AC1) et le deuxième espace de logement (AC2) par la paroi latérale interne (130SW), et dans lequel
le deuxième espace de logement (AC2) présente une largeur supérieure à celle de l'espace de logement (AC1), de sorte qu'une partie de support en forme de marche (130SP) entourant le diffuseur de lumière (120) est formée, le diffuseur de lumière (120) étant supporté sur le fond de la partie de support en forme de marche (130SP).

2. La source lumineuse selon la revendication 1, dans laquelle la valeur de voile du film de diffusion (122) est supérieure ou égale à 50 % et inférieure ou égale à 99 %.

3. La source lumineuse selon la revendication 1, dans laquelle la transmittance du film de diffusion (122) par rapport à la lumière de détection est supérieure ou égale à 50 % et inférieure ou égale à 99 %.

4. La source lumineuse selon l'une quelconque des revendications précédentes, dans laquelle le diffuseur de lumière comprend en outre une couche adhésive disposée entre l'élément de fixation et le film de diffusion.

5. La source lumineuse selon la revendication 4, dans laquelle le matériau de l'élément de fixation comprend du plastique.

6. La source lumineuse selon l'une quelconque des revendications précédentes, dans laquelle le diffuseur de lumière (120) est collé à l'élément de fixation (130) par l'intermédiaire d'une couche adhésive (123) prévue sur la face inférieure de la partie de support en forme de marche (130SP).

7. La source lumineuse selon l'une quelconque des revendications précédentes, dans laquelle la plage de longueurs d'onde de la lumière de détection comprend une bande de lumière infrarouge.

8. La source lumineuse selon l'une quelconque des revendications précédentes, dans laquelle le matériau de la couche de protection contre la lumière comprend un ruban adhésif de protection contre la lumière ou un matériau de revêtement de protection contre la lumière.

9. La source lumineuse selon l'une quelconque des revendications précédentes, dans laquelle le film de diffusion comprend une pluralité de particules de diffusion.

10. La source lumineuse selon l'une quelconque des revendications précédentes, dans laquelle la couche de protection contre la lumière présente une transmittance supérieure à 30 % pour la lumière de détection.

11. Un dispositif de suivi optique, comprenant
la source lumineuse (10) selon l'une quelconque des revendications précédentes,
un capteur optique, configuré pour détecter la lumière de détection émise par la source lumineuse (10) et réfléchie ou réfractée par un objet cible vers le capteur optique, et pour convertir la lumière de détection (L) détectée en signaux électriques, et
un processeur à semi-conducteurs, configuré pour recevoir les signaux électriques provenant du capteur optique et pour convertir les signaux électriques reçus afin de déterminer des informations concernant l'objet cible.
